# EUROPEAN PATENT SPECIFICATION

(11) **EP 3 208 302 B1**
(45) Date of publication and mention of the grant of the patent: **25.09.2019**
(21) Application number: 15850954.7
(22) Date of filing: 05.08.2015
(51) Int. Cl.: C08L 9/02, C08J 3/24, C08K 5/17, C08F 220/18, C08K 5/205, C08K 5/092

(54) **CROSSLINKABLE NITRILE RUBBER COMPOSITION AND RUBBER CROSSLINKED PRODUCT**
VERNETZBARE NITRILKAUTSCHUKZUSAMMENSETZUNG UND KAUTSCHUKVERNETZTES PRODUKT
COMPOSITION RÉTICULABLE DE CAOUTCHOUC DE NITRILE ET PRODUIT RÉTICULÉ DE CAOUTCHOUC

(30) Priority: 17.10.2014 JP 2014212365
(43) Date of publication of application: 23.08.2017
(73) Proprietor: Zeon Corporation, Tokyo 100-8246 (JP)
(72) Inventor: SUGAWARA, Shinsuke, Tokyo 100-8246 (JP); KATANO, Chikara, Tokyo 100-8246 (JP)
(74) Representative: Maiwald Patent- und Rechtsanwaltsgesellschaft mbH
(86) International application number: PCT/JP2015/072230
(87) International publication number: WO 2016/059855

(56) References cited:
- WO-A1-2009/096518
- WO-A1-2009/096518
- WO-A1-2011/049055
- WO-A1-2011/049055
- WO-A1-2014/050853
- WO-A1-2014/050853
- JP-A- 2010 024 452
- JP-A- 2010 024 452
- JP-A- 2010 144 176
- JP-A- 2010 144 176
- JP-A- 2013 018 936
- JP-A- 2013 018 936

## Description

### TECHNICAL FIELD

The present invention relates to a cross-linkable nitrile rubber composition able to give a cross-linked rubber excellent in mechanical properties such as tensile strength and elongation and excellent in heat aging resistance, cold resistance, and compression set resistance and to a cross-linked rubber obtained using that rubber composition.

### BACKGROUND ART

Since the past, nitrile rubber (acrylonitrile-butadiene copolymer rubber) has been used as a material for rubber parts such as hoses and tubes for automobiles by taking advantage of its fuel oil resistance, mechanical properties, chemical resistance, etc. Further, hydrogenated nitrile rubber (highly saturated nitrile rubber) obtained by hydrogenating the carbon-carbon double bonds in the polymer main chain is further excellent in heat resistance, so is being used for rubber parts such as hoses, seal members, gaskets, and diaphragms.

For example, Patent Document 1 discloses that a cross-linked rubber obtained by cross-linking a cross-linkable nitrile rubber composition comprising a highly saturated nitrile rubber containing α,β-ethylenically unsaturated dicarboxylic acid monoalkyl ester monomer units, a polyamine-based cross-linking agent, and a basic cross-linking accelerator is improved in heat resistance, tensile strength, and compression set. However, that cross-linked rubber sometimes falls in rubber elasticity at the time of use at a low temperature etc. For this reason, in addition to the above excellent features, further improvement of the cold resistance is being sought.

### RELATED ART

### PATENT DOCUMENTS

Patent Document 1: Japanese Patent Publication No. 2001-55471A

### SUMMARY OF THE INVENTION

### PROBLEM TO BE SOLVED BY THE INVENTION

On the other hand, in recent years, various rubber parts containing such nitrile rubber have been required to not only be excellent in mechanical properties such as tensile strength and elongation and in compression set resistance, but also be able to be used well in a broad range of temperature. For this reason, not only excellent heat resistance, but also excellent cold resistance is sought. In particular, much more excellent cold resistance (the ability to be used well even at a lower temperature) has been sought.

The present invention was made in consideration of such an actual situation and has as its object to provide a cross-linkable nitrile rubber composition able to give a cross-linked rubber excellent in mechanical properties such as tensile strength and elongation and excellent in heat aging resistance (in particular, cold resistance after heat aging), cold resistance, and compression set resistance and a cross-linked rubber obtained using that cross-linkable nitrile rubber composition.

### MEANS FOR SOLVING THE PROBLEM

The present inventors engaged in intensive research for achieving the above object and as a result discovered that the above object can be achieved by a cross-linkable nitrile rubber composition comprising a nitrile rubber (a) containing α,β-ethylenically unsaturated nitrile monomer units, α,β-ethylenically unsaturated dicarboxylic acid monoester monomer units, α,β-ethylenically unsaturated monocarboxylic acid ester monomer units, and diene monomer units and/or α-olefin monomer units in predetermined ratios to which a predetermined amount of a polyamine-based cross-linking agent is mixed and thereby completed the present invention.

That is, according to the present invention, there is provided a cross-linkable nitrile rubber composition comprising a nitrile rubber (a) containing 0.1 to 15 wt% of α,β-ethylenically unsaturated nitrile monomer units, 1 to 10 wt% of α,β-ethylenically unsaturated dicarboxylic acid monoester monomer units, 40 to 75 wt% of α,β-ethylenically unsaturated monocarboxylic acid ester monomer units, and 20 to 58.9 wt% of diene monomer units and/or α-olefin monomer units and a polyamine-based cross-linking agent (b), wherein a ratio of content of the polyamine-based cross-linking agent (b) with respect to 100 parts by weight of the nitrile rubber (a) is 0.1 to 20 parts by weight.

In the present invention, preferably the nitrile rubber (a) has an iodine value of 120 or less.

In the present invention, preferably the α,β-ethylenically unsaturated dicarboxylic acid monoester monomer units are mono-n-butyl maleate units.

In the present invention, preferably the α,β-ethylenically unsaturated monocarboxylic acid ester monomer units are butyl acrylate units and/or methoxyethyl acrylate units.

The cross-linkable nitrile rubber composition of the present invention preferably further comprises a basic cross-linking accelerator.

The cross-linkable nitrile rubber composition of the present invention preferably further comprises a plasticizer. The plasticizer is preferably at least one type selected from a trimellitic acid-based plasticizer, ether ester-based plasticizer, and adipic acid ester-based plasticizer.

Further, according to the present invention, there is provided a cross-linked rubber obtained by cross-linking the above cross-linkable nitrile rubber composition.

### EFFECTS OF INVENTION

According to the present invention, it is possible to provide a cross-linkable nitrile rubber composition able to give a cross-linked rubber excellent in mechanical properties such as tensile strength and elongation and excellent in heat aging resistance (in particular, cold resistance after heat aging), cold resistance, and compression set resistance and a cross-linked rubber obtained using that cross-linkable nitrile rubber composition and provided with the above properties.

### DESCRIPTION OF EMBODIMENTS

### Cross-Linkable Nitrile Rubber Composition

The cross-linkable nitrile rubber composition of the present invention is a rubber composition containing a later explained nitrile rubber (a) and a later explained polyamine-based cross-linking agent (b), wherein a ratio of content of the polyamine-based cross-linking agent (b) with respect to 100 parts by weight of the nitrile rubber (a) is 0.1 to 20 parts by weight.

### Nitrile Rubber (a)

The nitrile rubber (a) used in the present invention is a rubber containing 0.1 to 15 wt% of α,β-ethylenically unsaturated nitrile monomer units, 1 to 10 wt% of α,β-ethylenically unsaturated dicarboxylic acid monoester monomer units, 40 to 75 wt% of α,β-ethylenically unsaturated monocarboxylic acid ester monomer units, and 20 to 58.9 wt% of diene monomer units and/or α-olefin monomer units.

An α,β-ethylenically unsaturated nitrile monomer forming the α,β-ethylenically unsaturated nitrile monomer units is not limited so long as an α,β-ethylenically unsaturated compound having a nitrile group. An acrylonitrile; an α-halogenoacrylonitrile such as α-chloroacrylonitrile and α-bromoacrylonitrile; an α-alkylacrylonitrile such as methacrylonitrile may be mentioned. Acrylonitrile and methacrylonitrile are preferable. The α,β-ethylenically unsaturated nitrile monomer may be used as a single type alone or as a plurality of types combined.

In the nitrile rubber (a), the content of the α,β-ethylenically unsaturated nitrile monomer units is 0.1 to 15 wt%, preferably 3 to 14 wt%, more preferably 6 to 12 wt%. If the content of the α,β-ethylenically unsaturated nitrile monomer units is too small, the obtained cross-linked rubber is liable to fall in oil resistance, while conversely, if too great, it may fall in heat aging resistance.

The α,β-ethylenically unsaturated dicarboxylic acid monoester monomer units have one free carboxyl group and usually act as a cross-linkable monomer unit. By including the α,β-ethylenically unsaturated dicarboxylic acid monoester monomer units, the obtained cross-linked rubber becomes good in tensile stress and oil resistance and can be made excellent in heat aging resistance, cold resistance, and compression set resistance.

As an α,β-ethylenically unsaturated dicarboxylic acid monoester monomer forming the α,β-ethylenically unsaturated dicarboxylic acid monoester monomer units, ones in which the organic group bonding with the carbonyl group through the oxygen atom of the ester part is an alkyl group, cycloalkyl group, and alkylcycloalkyl group are preferable, while one in which it is an alkyl group is particularly preferable. The number of carbon atoms of the alkyl group is preferably 1 to 10, more preferably 2 to 6, particularly preferably 4 to 5, the number of carbon atoms of the cycloalkyl group is preferably 5 to 12, more preferably 6 to 10, and the number of carbon atoms of the alkylcycloalkyl group is preferably 6 to 12, more preferably 7 to 10. If the number of carbon atoms of the organic group bonding with the carbonyl group is too small, the stability of processing of the cross-linkable nitrile rubber composition is liable to fall. On the other hand, if the number of carbon atoms of that is too large, the cross-linking speed becomes slower or the obtained cross-linked rubber may fall in mechanical properties.

As specific examples of the α,β-ethylenically unsaturated dicarboxylic acid monoester monomers, a maleic acid monoalkyl ester such as monomethyl maleate, monoethyl maleate, monopropyl maleate, and mono-n-butyl maleate; a maleic acid monocycloalkyl ester such as monocyclopentyl maleate, monocyclohexyl maleate, and monocycloheptyl maleate; a maleic acid monoalkyl cycloalkyl ester such as monomethylcyclopentyl maleate and monoethylcyclohexyl maleate; a fumaric acid monoalkyl ester such as monomethyl fumarate, monoethyl fumarate, monopropyl fumarate, and mono-n-butyl fumarate; a fumaric acid monocycloalkyl ester such as monocyclopentyl fumarate, monocyclohexyl fumarate, and monocycloheptyl fumarate; a fumaric acid monoalkyl cycloalkyl ester such as monomethylcyclopentyl fumarate and monoethylcyclohexyl fumarate; a citraconic acid monoalkyl ester such as monomethyl citraconate, monoethyl citraconate, monopropyl citraconate, and mono-n-butyl citraconate; a citraconic acid monocycloalkyl ester such as monocyclopentyl citraconate, monocyclohexyl citraconate, and monocycloheptyl citraconate; a citraconic acid monoalkyl cycloalkyl ester such as monomethylcyclopentyl citraconate and monoethylcyclohexyl citraconate; an itaconic acid monoalkyl ester such as monomethyl itaconate, monoethyl itaconate, monopropyl itaconate, and mono-n-butyl itaconate; an itaconic acid monocycloalkyl ester such as monocyclopentyl itaconate, monocyclohexyl itaconate, and monocycloheptyl itaconate; an itaconic acid monoalkyl cycloalkyl ester such as monomethylcyclopentyl itaconate and monoethylcyclohexyl itaconate; etc. may be mentioned.

Among these as well, from the viewpoint of being able to make the effect of the present invention much more remarkable, a maleic acid monoalkyl ester is preferable, a maleic acid monoalkyl ester having an alkyl group having 2 to 6 carbon atoms is more preferable, and mono-n-butyl maleate is particularly preferable. The α,β-ethylenically unsaturated dicarboxylic acid monoester monomer may be used as a single type alone or as a plurality of types combined.

In the nitrile rubber (a), the content of the α,β-ethylenically unsaturated dicarboxylic acid monoester monomer units is 1 to 10 wt%, preferably 2 to 8 wt%, more preferably 3 to 6 wt%. If the content of the α,β-ethylenically unsaturated dicarboxylic acid monoester monomer units is too small, the obtained cross-linked rubber ends up deteriorating in compression set resistance. On the other hand, if too great, the heat aging resistance and cold resistance end up deteriorating.

Further, the nitrile rubber (a) contains, in addition to α,β-ethylenically unsaturated nitrile monomer units and α,β-ethylenically unsaturated dicarboxylic acid monoester monomer units, α,β-ethylenically unsaturated monocarboxylic acid ester monomer units. By containing α,β-ethylenically unsaturated monocarboxylic acid ester monomer units, the obtained cross-linked rubber may be improved in heat aging resistance and cold resistance while being excellent in mechanical properties such as tensile strength and elongation.

An α,β-ethylenically unsaturated monocarboxylic acid ester monomer forming the α,β-ethylenically unsaturated monocarboxylic acid ester monomer units is not particularly limited, but, for example, an α,β-ethylenically unsaturated monocarboxylic acid alkyl ester monomer, α,β-ethylenically unsaturated monocarboxylic acid alkoxyalkyl ester monomer, α,β-ethylenically unsaturated monocarboxylic acid aminoalkyl ester monomer, α,β-ethylenically unsaturated monocarboxylic acid hydroxyalkyl ester monomer, α,β-ethylenically unsaturated monocarboxylic acid fluoroalkyl ester monomer, etc. may be mentioned.

Among these as well, an α,β-ethylenically unsaturated monocarboxylic acid alkyl ester monomer or α,β-ethylenically unsaturated monocarboxylic acid alkoxyalkyl ester monomer is preferable.

As the α,β-ethylenically unsaturated monocarboxylic acid alkyl ester monomer, one having, as an alkyl group, an alkyl group having 3 to 10 carbon atoms is preferable, one having an alkyl group having 3 to 8 carbon atoms is more preferable, and one having an alkyl group having 4 to 6 carbon atoms is still more preferable.

As specific examples of the α,β-ethylenically unsaturated monocarboxylic acid alkyl ester monomer, an acrylic acid alkyl ester monomer such as propyl acrylate, n-butyl acrylate, n-pentyl acrylate, and 2-ethylhexyl acrylate; an acrylic acid cycloalkyl ester monomer such as cyclopentyl acrylate and cyclohexyl acrylate; an acrylic acid alkylcycloalkyl ester monomer such as methylcyclopentyl acrylate, ethylcyclopentyl acrylate, and methylcyclohexyl acrylate; a methacrylic acid alkyl ester monomer such as propyl methacrylate, n-butyl methacrylate, n-pentyl methacrylate, and n-octyl methacrylate; a methacrylic acid cycloalkyl ester monomer such as cyclopentyl methacrylate, cyclohexyl methacrylate, and cyclopentyl methacrylate; a methacrylic acid alkylcycloalkyl ester monomer such as methylcyclopentyl methacrylate, ethylcyclopentyl methacrylate, and methylcyclohexyl methacrylate; a crotonic acid alkyl ester monomer such as propyl crotonate, n-butyl crotonate, and 2-ethylhexyl crotonate; a crotonic acid cycloalkyl ester monomer such as cyclopentyl crotonate, cyclohexyl crotonate, and cyclooctyl crotonate; a crotonic acid alkylcycloalkyl ester monomer such as methylcyclopentyl crotonate and methylcyclohexyl crotonate; etc. may be mentioned.

Further, as an α,β-ethylenically unsaturated monocarboxylic acid alkoxyalkyl ester monomer, one having, as an alkoxyalkyl group, an alkoxyalkyl group having 2 to 8 carbon atoms is preferable, one having an alkoxyalkyl group having 2 to 6 carbon atoms is more preferable, and one having an alkoxyalkyl group having 2 to 4 carbon atoms is still more preferable.

As specific examples of the α,β-ethylenically unsaturated monocarboxylic acid alkoxyalkyl ester monomer, an acrylic acid alkoxyalkyl ester monomer such as methoxymethyl acrylate, methoxyethyl acrylate, ethoxymethyl acrylate, ethoxyethyl acrylate, n-propoxyethyl acrylate, i-propoxyethyl acrylate, n-butoxyethyl acrylate, i-butoxyethyl acrylate, t-butoxyethyl acrylate, methoxypropyl acrylate, and methoxybutyl acrylate; a methacrylic acid alkoxyalkyl ester monomer such as methoxymethyl methacrylate, methoxyethyl methacrylate, ethoxymethyl methacrylate, ethoxyethyl methacrylate, n-propoxyethyl methacrylate, i-propoxyethyl methacrylate, n-butoxyethyl methacrylate, i-butoxyethyl methacrylate, t-butoxyethyl methacrylate, methoxypropyl methacrylate, and methoxybutyl methacrylate; etc. may be mentioned.

Among these α,β-ethylenically unsaturated monocarboxylic acid ester monomers as well, from the viewpoint of making the effect of the present invention much more remarkable, an acrylic acid alkyl ester monomer and acrylic acid alkoxyalkyl ester monomer are preferable, n-butyl acrylate and methoxyethyl acrylate are more preferable, and n-butyl acrylate is particularly preferable.

In the nitrile rubber (a), the content of the α,β-ethylenically unsaturated monocarboxylic acid ester monomer units is 40 to 75 wt%, preferably 40 to 65 wt%, more preferably 43 to 55 wt%. Both if the content of the α,β-ethylenically unsaturated monocarboxylic acid ester monomer units is too small or too great, the obtained cross-linked rubber ends up deteriorating in heat aging resistance and cold resistance.

Further, the nitrile rubber (a) may also contain, in addition to the above-mentioned α,β-ethylenically unsaturated nitrile monomer units, α,β-ethylenically unsaturated dicarboxylic acid monoester monomer units, and α,β-ethylenically unsaturated monocarboxylic acid ester monomer units, diene monomer units and/or α-olefin monomer units for the obtained cross-linked rubber to have rubber elasticity.

As specific examples of a diene monomer forming the diene monomer units, a conjugated diene monomer having 4 or more carbon atoms such as 1,3-butadiene, isoprene, 2,3-dimethyl-1,3-butadiene, and 1,3-pentadiene; a nonconjugated diene monomer preferably having 5 to 12 carbon atoms such as 1,4-pentadiene and 1,4-hexadiene may be mentioned. Among these, a conjugated diene monomer is preferable, while a 1,3-butadiene is more preferable.

As specific examples of an α-olefin monomer forming α-olefin monomer units, preferably one having 2 to 12 carbon atoms such as ethylene, propylene, 1-butene, 4-methyl-1-pentene, 1-hexene, and 1-octene may be mentioned.

In the nitrile rubber (a), the content of the diene monomer units and/or α-olefin monomer units is 20 to 58.9 wt%, preferably 30 to 50 wt%, more preferably 35 to 45 wt%. If the content of these is too small, the cross-linked rubber is liable to fall in rubber elasticity, while conversely if too great, the heat resistance and the chemical stability are liable to be impaired.

Further, the nitrile rubber (a) used in the present invention can contain units of other monomers able to copolymerize with an α,β-ethylenically unsaturated nitrile monomer, α,β-ethylenically unsaturated dicarboxylic acid monoester monomer, α,β-ethylenically unsaturated monocarboxylic acid ester monomer, and diene monomer and/or α-olefin monomer. As such other monomer, an α,β-ethylenically unsaturated dicarboxylic acid diester monomer, α,β-ethylenically unsaturated monocarboxylic acid monomer, α,β-ethylenically unsaturated polyvalent carboxylic acid monomer, α,β-ethylenically unsaturated polyvalent carboxylic acid anhydride, aromatic vinyl monomer, fluorine-containing vinyl monomer, copolymerizable antiaging agent, etc. may be illustrated.

As the α,β-ethylenically unsaturated dicarboxylic acid diester monomer, a maleic acid dialkyl ester having alkyl groups having 1 to 18 carbon atoms such as dimethyl maleate and di-n-butyl maleate; a fumaric acid dialkyl ester having alkyl groups having 1 to 18 carbon atoms such as dimethyl fumarate and di-n-butyl fumarate; a maleic acid dicycloalkyl ester having cycloalkyl groups having 4 to 16 carbon atoms such as dicyclopentyl maleate and dicyclohexyl maleate; a fumaric acid dicycloalkyl ester having cycloalkyl groups having 4 to 16 carbon atoms such as dicyclopentyl fumarate and dicyclohexyl fumarate; an itaconic acid dialkyl ester having alkyl groups having 1 to 18 carbon atoms such as dimethyl itaconate and di-n-butyl itaconate; an itaconic acid dicycloalkyl ester having cycloalkyl groups having 4 to 16 carbon atoms such as dicyclohexyl itaconate; etc. may be mentioned.

As the α,β-ethylenically unsaturated monocarboxylic acid monomer, acrylic acid, methacrylic acid, etc. may be mentioned.

As the α,β-ethylenically unsaturated polyvalent carboxylic acid monomer, itaconic acid, fumaric acid, maleic acid, etc. may be mentioned.

As the α,β-ethylenically unsaturated polyvalent carboxylic acid anhydride, maleic anhydride etc. may be mentioned.

As the aromatic vinyl monomer, styrene, α-methylstyrene, vinylpyridine, etc. may be mentioned.

As the fluorine-containing vinyl monomer, fluoroethylvinyl ether, fluoropropylvinyl ether, o-trifluoromethylstyrene, vinyl pentafluorobenzoate, difluoroethylene, tetrafluoroethylene, etc. may be mentioned.

As the copolymerizable antiaging agent, N-(4-anilinophenyl)acrylamide, N-(4-anilinophenyl)methacrylamide, N-(4-anilinophenyl)cinnamide, N-(4-anilinophenyl)crotonamide, N-phenyl-4-(3-vinylbenzyloxy)aniline, N-phenyl-4-(4-vinylbenzyloxy)aniline, etc. may be mentioned.

These copolymerizable other monomers may also be used as plurality of types combined. When including other monomer units, the content of the other monomer units is preferably 50 wt% or less in the nitrile rubber (a), more preferably 40 wt% or less, still more preferably 10 wt% or less, particularly preferably 3 wt% or less.

The content of the carboxyl group in the nitrile rubber (a) used in the present invention, that is, the number of moles of the carboxyl group per 100 g of the nitrile rubber (a), is preferably 5×10⁻⁴ to 5×10⁻¹ ephr, more preferably 1×10⁻³ to 1×10⁻¹ ephr, particularly preferably 5×10⁻³ to 6×10⁻² ephr. By making the content of the carboxyl group of the nitrile rubber (a) the above range, it is possible to make the cross-linkable nitrile rubber composition sufficiently proceed in cross-linking. Due to this, it is possible to make the mechanical strength of the cross-linked rubber more excellent.

The nitrile rubber (a) used in the present invention is not particularly limited in iodine value, but from the viewpoint of being able to raise the heat aging resistance more, it is preferably 120 or less, more preferably 85 or less, still more preferably 80 or less. Note that, the nitrile rubber (a) used in the present invention preferably has an iodine value in the above range, but from the viewpoint of making the obtained cross-linked rubber more excellent in heat resistance and ozone resistance, the iodine value is preferably 25 or less, more preferably 15 or less. Alternatively, from the viewpoint of making the obtained cross-linked rubber more excellent in cold resistance, the iodine value is preferably 35 to 85, more preferably 40 to 70, still more preferably 40 to 60.

Further, the polymer Mooney viscosity (ML₁₊₄, 100°C) of the nitrile rubber (a) is preferably 15 to 200, more preferably 15 to 150, particularly preferably 15 to 100. If the nitrile rubber (a) is too low in Mooney viscosity, the obtained cross-linked rubber is liable to fall in strength properties, while conversely if too high, the cross-linkable nitrile rubber composition may fall in processability.

The method of production of the nitrile rubber (a) used in the present invention is not particularly limited, but it is preferable to produce it by emulsion polymerization using an emulsifier to copolymerize the above monomers and prepare a latex of a copolymer rubber and hydrogenating it in accordance with need. At the time of emulsion polymerization, a normally used polymerization secondary material such as an emulsifier, polymerization initiator, and molecular weight adjuster may be used.

The emulsifier is not particularly limited, but, for example, a nonionic emulsifier such as polyoxyethylenealkyl ether, polyoxyethylenealkylphenol ether, polyoxyethylenealkyl ester, and polyoxyethylenesorbitanalkyl ester; an anionic emulsifier such as a salt of a fatty acid such as myristic acid, palmitic acid, oleic acid, and linoleic acid, an alkylbenzene sulfonic acid salt such as sodium dodecylbenzene sulfonate, a higher alcohol sulfuric acid ester salt, and an alkylsulfosuccinic acid salt; a copolymerizable emulsifier such as a sulfo ester of α,β-unsaturated carboxylic acid, a sulfate ester of α,β-unsaturated carboxylic acid, and a sulfoalkylaryl ether; etc. may be mentioned. The amount of use of the emulsifier is preferably 0.1 to 10 parts by weight with respect to 100 parts by weight of the total monomer.

The polymerization initiator is not particularly limited so long as a radical initiator, but an inorganic peroxide such as potassium persulfate, sodium persulfate, ammonium persulfate, potassium perphosphate, and hydrogen peroxide; an organic peroxide such as t-butyl peroxide, cumen hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, and t-butyl peroxyisobutyrate; an azo compound such as azobisisobutyronitrile, azobis-2,4-dimethylvaleronitrile, azobiscyclohexane carbonitrile, and dimethyl azobisisobutyrate; etc. may be mentioned. The polymerization initiator may be used alone or as two types or more combined. As the polymerization initiator, an inorganic or organic peroxide is preferable. When using a peroxide as the polymerization initiator, it may be combined with a reducing agent such as sodium bisulfite and ferrous sulfate as a redox type polymerization initiator. The amount of use of the polymerization initiator is preferably 0.01 to 2 parts by weight with respect to 100 parts by weight of the total monomer.

The molecular weight adjuster is not particularly limited, but mercaptans such as t-dodecyl mercaptan, n-dodecyl mercaptan, and octyl mercaptan; a halogenated hydrocarbon such as carbon tetrachloride, methylene chloride, and methylene bromide;α-methylstyrene dimer; a sulfur-containing compound such as tetraethylthiuram disulfide, dipentamethylene thiuram disulfide, and diisopropylxantogen disulfide etc. may be mentioned. These may be used alone or as two types or more combined. Among these, mercaptans are preferable, while t-dodecyl mercaptan is more preferable. The amount of use of the molecular weight adjuster is preferably 0.1 to 0.8 part by weight with respect to 100 parts by weight of the total monomer.

For the medium of the emulsion polymerization, usually water is used. The amount of water is preferably 80 to 500 parts by weight with respect to 100 parts by weight of the total monomer.

At the time of emulsion polymerization, furthermore, in accordance with need, a polymerization secondary material such as a stabilizer, dispersant, pH adjuster, deoxidizer, and particle size adjuster may be used. When using these, the types and amounts are not particularly limited.

Note that, to make the iodine value of the copolymer obtained by copolymerization a desired level, it is also possible to hydrogenate the copolymer (hydrogenation reaction) in accordance with need. In this case, the method of hydrogenation is not particularly limited. A known method may be employed.

### Polyamine-Based Cross-Linking Agent (b)

The cross-linkable nitrile rubber composition of the present invention contains, in addition to the above-mentioned nitrile rubber (a), a polyamine-based cross-linking agent (b). By combining a polyamine-based cross-linking agent (b) with the above-mentioned nitrile rubber (a), the obtained cross-linked rubber can be made excellent in heat aging resistance, cold resistance, and compression set resistance while being made excellent in mechanical properties such as tensile strength and elongation.

The polyamine-based cross-linking agent (b) is not particularly limited so long as a compound having two or more amino groups or one becoming the form of a compound having two or more amino groups at the time of cross-linking, but a compound of an aliphatic hydrocarbon or aromatic hydrocarbon where its plurality of hydrogen atoms are substituted by amino groups or hydrazide structures (structures represented by -CONHNH₂, where CO shows a carbonyl group), and a compound becoming that form at the time of cross-linking are preferable.

As specific examples of the polyamine cross-linking agent (b), aliphatic polyvalent amines such as hexamethylenediamine, hexamethylenediamine carbamate, N,N-dicinnamylidene-1,6-hexanediamine, tetramethylenepentamine, and hexamethylenediamine cinnamaldehyde adduct; aromatic polyvalent amines such as 4,4-methylene dianiline, m-phenylene diamine, 4,4-diaminodiphenyl ether, 3,4-diaminodiphenyl ether, 4,4-(m-phenylene diisopropylidene)dianiline, 4,4-(p-phenylene diisopropylidene)dianiline, 2,2-bis[4-(4-aminophenoxy)phenyl]propane, 4,4-diaminobenzanilide, 4,4-bis(4-aminophenoxy)biphenyl, m-xylylenediamine, p-xylylenediamine, and 1,3,5-benzenetriamine; polyvalent hydrazides such as isophthalic dihydrazide, terephthalic dihydrazide, phthalic dihydrazide, 2,6-naphthalene dicarboxylic acid dihydrazide, naphthalene acid dihydrazide, oxalic dihydrazide, malonic dihydrazide, succinic dihydrazide, glutamic dihydrazide, adipic dihydrazide, pimelic dihydrazide, suberic dihydrazide, azelaic dihydrazide, sebacic dihydrazide, brassylic dihydrazide, dodecane diacid dihydrazide, acetone dicarboxylic acid dihydrazide, fumaric dihydrazide, maleic dihydrazide, itaconic dihydrazide, trimellitic dihydrazide, 1,3,5-benzenetricarboxylic acid dihydrazide, aconitic dihydrazide, and pyromellitic dihydrazide may be mentioned. Among these as well, from the viewpoint of being able to make the effects of the present invention much more remarkable, aliphatic polyvalent amines and aromatic polyvalent amines are preferable, while hexamethylene diamine carbamate and 2,2-bis[4-(4-aminophenoxy)phenyl]propane are more preferable and hexamethylenediamine carbamate is particularly preferable.

In the cross-linkable nitrile rubber composition of the present invention, the content of the polyamine-based cross-linking agent (b) is not particularly limited, but is preferably 0.1 to 20 parts by weight with respect to 100 parts by weight of the nitrile rubber (a), preferably 0.2 to 15 parts by weight, more preferably 0.5 to 10 parts by weight. If the content of the polyamine-based cross-linking agent (b) is too small, the cross-linking becomes insufficient and the obtained cross-linked rubber ends up deteriorating in mechanical properties. On the other hand, if too large as well, the obtained cross-linked rubber ends up deteriorating in mechanical properties.

### Other Compounding Agents

Further, the cross-linkable nitrile rubber composition of the present invention preferably further contains a basic cross-linking accelerator in addition to the above-mentioned nitrile rubber (a) and polyamine-based cross-linking agent (b) from the viewpoint of making the action and effect of the present invention more remarkable.

As specific examples of the basic cross-linking accelerator (D), basic cross-linking accelerators having a cyclic amidine structure such as 1,8-diazabicyclo[5,4,0]undecene-7 (below, sometimes abbreviated as "DBU"), 1,5-diazabicyclo[4,3,0]nonene-5 (below, sometimes abbreviated as "DBN"), 1-methylimidazole, 1-ethylimidazole, 1-phenylimidazole, 1-benzylimidazole, 1,2-dimethylimidazole, 1-ethyl-2-methylimidazole, 1-methoxyethylimidazole, 1-phenyl-2-methylimidazole, 1-benzyl-2-methylimidazole, 1-methyl-2-phenylimidazole, 1-methyl-2-benzylimidazole, 1,4-dimethylimidazole, 1,5-dimethylimidazole, 1,2,4-trimethylimidazole, 1,4-dimethyl-2-ethylimidazole, 1-methyl-2-methoxyimidazole, 1-methyl-2-ethoxyimidazole, 1-methyl-4-methoxyimidazole, 1-methyl-2-methoxyimidazole, 1-ethoxymethyl-2-methylimidazole, 1-methyl-4-nitroimidazole, 1,2-dimethyl-5-nitroimidazole, 1,2-dimethyl-5-aminoimidazole, 1-methyl-4-(2-aminoethyl)imidazole, 1-methylbenzoimidazole, 1-methyl-2-benzylbenzoimidazole, 1-methyl-5-nitrobenzoimidazole, 1-methylimidazoline, 1,2-dimethylimidazoline, 1,2,4-trimethylimidazoline, 1,4-dimethyl-2-ethylimidazoline, 1-methyl-phenylimidazoline, 1-methyl-2-benzylimidazoline, 1-methyl-2-ethoxyimidazoline, 1-methyl-2-heptylimidazoline, 1-methyl-2-undecylimidazoline, 1-methyl-2-heptadecylimidazoline, 1-methyl-2-ethoxymethylimidazoline, and 1-ethoxymethyl-2-methylimidazoline; guanidine-based basic cross-linking accelerators such as tetramethylguanidine, tetraethylguanidine, diphenylguanidine, 1,3-di-o-tolylguanidine, and o-tolylbiguanide; aldehyde amine-based basic cross-linking accelerators such as n-butylaldehyde aniline and acetoaldehyde ammonia; dicycloalkylamine such as dicyclopentylamine, dicyclohexylamine, and dicycloheptylamine; secondary amine-based basic cross-linking accelerators such as N-methylcyclopentylamine, N-butylcyclopentylamine, N-heptylcyclopentylamine, N-octylcyclopentylamine, N-ethylcyclohexylamine, N-butylcyclohexylamine, N-heptylcyclohexylamine, N-octylcyclooctylamine, N-hydroxymethylcyclopentylamine, N-hydroxybutylcyclohexylamine, N-methoxyethylcyclopentylamine, N-ethoxybutylcyclohexylamine, N-methoxycarbonylbutylcyclopentylamine, N-methoxycarbonylheptylcyclohexylamine, N-aminopropylcyclopentylamine, N-aminoheptylcyclohexylamine, di(2-chlorocyclopentyl)amine, and di(3-chlorocyclopentyl)amine; etc. may be mentioned. Among these as well, a guanidine-based basic cross-linking accelerator, secondary amine-based basic cross-linking accelerator, and basic cross-linking accelerator having a cyclic amidine structure are preferable, a basic cross-linking accelerator having a cyclic amidine structure is more preferable, 1,8-diazabicyclo[5,4,0]undecene-7 and 1,5-diazabicyclo[4,3,0]nonene-5 are further preferable, and 1,8-diazabicyclo[5,4,0]undecene-7 is particularly preferable. Note that, the basic cross-linking accelerator having a cyclic amidine structure may form a salt with an organic carboxylic acid, alkyl phosphoric acid, etc. Further, the secondary amine-based basic cross-linking accelerator may be one mixed with an alkyleneglycol or alcohols such as an alkylalcohol having 5 to 20 carbon atoms and may be one further containing inorganic acids and/or organic acids. Further, it is also possible for the secondary amine-based basic cross-linking accelerator and the inorganic acid and/or organic acid to form a salt and further form a composite with the alkyleneglycol.

When mixing in a basic cross-linking accelerator, the amount in the cross-linkable nitrile rubber composition of the present invention is preferably 0.1 to 20 parts by weight with respect to 100 parts by weight of the nitrile rubber (a), more preferably 0.2 to 15 parts by weight, still more preferably 0.5 to 10 parts by weight.

Further, the cross-linkable nitrile rubber composition of the present invention may have blended into it, in addition to the above, other compounding agents which are usually used in the field of rubber processing, for example, a reinforcing agent such as carbon black and silica, a filler such as calcium carbonate, talc, and clay, metal oxide such as zinc oxide and magnesium oxide, co-cross-linking agent, cross-linking aid, cross-linking retarder, antiaging agent, antioxidant, photostabilizer, scorch preventer such as a primary amine, activator such as diethyleneglycol, silane coupling agent, plasticizer, processing aid, slip agent, tackifier, lubricant, flame retardant, antifungal agent, acid acceptor, antistatic agent, pigment, foaming agent, etc. The amounts of these compounding agents are not particularly limited so long as in ranges not impairing the object or effects of the present invention. As the amounts of these compounding agents, amounts according to the purposes of inclusion may be suitably employed.

As the carbon black, for example, furnace black, acetylene black, thermal black, channel black, austin black, graphite, etc. may be mentioned. These may be used as single types or as a plurality of types combined.

As the silica, natural silica such as quartz powder and silicastone powder; synthetic silica such as anhydrous silicic acid (silica gel, aerosil, etc.) and hydrous silicic acid; etc. may be mentioned. Among these as well, synthetic silica is preferable. Further, these silicas may be surface treated by a silane coupling agent etc.

The silane coupling agent is not particularly limited, but as specific examples, silane coupling agents containing sulfur such as γ-mercaptopropyl trimethoxysilane, γ-mercaptomethyl trimethoxysilane, γ-mercaptomethyl triethoxysilane, γ-mercaptohexamethyl disilazane, bis(3-triethoxysilylpropyl) tetrasulfane, and bis(3-triethoxysilylpropyl) disulfane; epoxy group-containing silane coupling agents such as γ-glycidoxypropyltrimethoxysilane, γ-glycidoxypropylmethyldimethoxysilane, β-(3,4-epoxycyclohexyl)ethyltrimethoxysilane, γ-mercaptopropyltrimethoxysilane, and γ-glycidoxypropylmethyldiethoxysilane; amino group-containing silane coupling agents such as N-(β-aminoethyl)-γ-aminopropyltrimethoxysilane, γ-aminopropyltrimethoxysilane, γ-aminopropyltriethoxysilane, N-2-(aminoethyl)-3-aminopropyltrimethoxysilane, N-2-(aminoethyl)-3-aminopropyltriethoxysilane, 3-triethoxysilyl-N-(1,3-dimethylbutylidene)propylamine, and N-phenyl-3-aminopropyltrimethoxysilane; (meth)acryloxy group-containing silane coupling agents such as γ-methacryloxypropyltrimethoxysilane, γ-methacryloxypropyltris(β-methoxyethoxy)silane, γ-methacryloxypropylmethyldimethoxysilane, γ-methacryloxypropylmethyldiethoxysilane, γ-methacryloxypropyltriethoxysilane, and γ-acryloxypropyltrimethoxysilane; vinyl group-containing silane coupling agents such as vinyltrimethoxysilane, vinyltriethoxysilane, vinyltris(β-methoxyethoxy)silane, vinyltrichlorosilane, and vinyltriacetoxysilane; chloropropyl group-containing silane coupling agents such as 3-chloropropyltrimethoxysilane; isocyanate group-containing silane coupling agents such as 3-isocyanatepropyltriethoxysilane; styryl group-containing silane coupling agents such as p-styryltrimethoxysilane; ureide group-containing silane coupling agents such as 3-ureidopropyltriethoxysilane; allyl group-containing silane coupling agents such as diallyldimethylsilane; alkoxy group-containing silane coupling agents such as tetraethoxysilane; phenyl group-containing silane coupling agents such as diphenyldimethoxysilane; fluoro group-containing silane coupling agents such as trifluoropropyltrimethoxysilane; alkyl group-containing silane coupling agents such as isobutyltrimethoxysilane and cyclohexylmethyldimethoxysilane; aluminum-based coupling agents such as acetoalkoxyaluminum diisopropylate; a titanate-based coupling agent such as isopropyltriisostearoyl titanate, isopropyltris(dioctylpyrophosphate) titanate, isopropyltri(N-aminoethyl-aminoethyl) titanate, tetraoctylbis(ditridecylphosphite) titanate, tetra(2,2-diallyloxymethyl-1-butyl)bis(ditridecyl)phosphite titanate, bis(dioctylpyrophosphate)oxyacetate titanate, bis(dioctylpyrophosphate)ethylene titanate, tetraisopropylbis(dioctylphosphite) titanate, and isopropyltriisostearoyl titanate; etc. may be mentioned. These may be used as single types or as a plurality of types combined.

The co-cross-linking agent is not particularly limited, but a low molecular weight or high molecular weight compound having several radical reactive unsaturated groups in its molecule is preferable, for example, polyfunctional vinyl compounds such as divinylbenzene and divinylnaphthalene; isocyanurates such as triallyl isocyanurate and trimethallyl isocyanurate; cyanurates such as triallyl cyanurate; maleimides such as N,N'-m-phenylene dimaleimide; allyl esters of polyvalent acid such as diallyl phthalate, diallyl isophthalate, diallyl maleate, diallyl fumarate, diallyl sebacate, and triallyl phosphate; diethyleneglycolbisallyl carbonate; allyl ethers such as ethyleneglycol diallyl ether, trimethylolpropane triallyl ether, and partial allyl ether of pentaerythrit; allyl-modified resins such as allylated novolac resin and allylated resol resin; tri- to pentafunctional methacrylate compounds or acrylate compounds such as trimethylolpropane trimethacrylate and trimethylolpropane triacrylate; etc. may be mentioned. These may be used as single types or as a plurality of types combined.

The plasticizer is not particularly limited, but a trimellitic acid-based plasticizer, pyromellitic acid-based plasticizer, ether ester-based plasticizer, polyester-based plasticizer, phthalic acid-based plasticizer, adipic acid ester-based plasticizer, phosphoric acid ester-based plasticizer, sebacic-acid ester-based plasticizer, alkylsulfonic acid ester compound plasticizer, epoxylated plant oilbased plasticizer, etc. may be used. As specific examples, tri-2-ethylhexyl trimellitate, trimellitic acid isononyl ester, trimellitic acid mixed linear alkyl ester, dipentaerythritol ester, pyromellitic acid 2-ethylhexyl ester, polyether esters (molecular weight 300 to 5000 or so), bis[2-(2-butoxyethoxy)ethyl] adipate, dioctyl adipate, adipic acid-based polyester (molecular weight 300 to 5000 or so), dioctyl phthalate, diisononyl phthalate, dibutyl phthalate, tricresyl phosphate, dibutyl sebacate, alkylsulfonic acid phenyl ester, epoxylated soybean oil, diheptanoate, di-2-ethylhexanoate, didecanoate, etc. may be mentioned. These may be used as single types or as a plurality of types combined. By mixing in the plasticizer, the workability and cold resistance can be improved. Among these as well, from the viewpoint of the large effect of addition, a trimellitic acid-based plasticizer, ether ester-based plasticizer, and an adipic acid ester-based plasticizer are preferable. In the cross-linkable nitrile rubber composition of the present invention, the amount of the plasticizer is preferably 3 to 30 parts by weight with respect to 100 parts by weight of the nitrile rubber (a), more preferably 4 to 25 parts by weight, still more preferably 5 to 20 parts by weight.

Furthermore, the cross-linkable nitrile rubber composition of the present invention may contain other rubber besides the above-mentioned nitrile rubber (a) in a range where the effects of the present invention are not obstructed. As the rubber other than the nitrile rubber (a), an acrylic rubber, ethylene-acrylic acid copolymer rubber, fluororubber, styrene-butadiene copolymer rubber, polybutadiene rubber, ethylene-propylene copolymer rubber, ethylene-propylene-diene ternary copolymer rubber, epichlorohydrin rubber, urethane rubber, chloroprene rubber, silicone rubber, fluorosilicone rubber, chlorosulfonated polyethylene rubber, natural rubber and polyisoprene rubber etc. may be mentioned. In the case of mixing in rubber other than nitrile rubber (a), the amount is preferably 30 parts by weight or less with respect to 100 parts by weight of the nitrile rubber (a), more preferably 20 parts by weight or less, still more preferably 10 parts by weight or less.

The cross-linkable nitrile rubber composition of the present invention can be prepared by mixing the above ingredients in a preferably nonaqueous system. The method of preparing the cross-linkable rubber composition of the present invention is not particularly limited, but usually it can be prepared by kneading the ingredients other than the polyamine-based cross-linking agent (b) and the ingredient which is unstable against heat such as cross-linking aid by a mixing machine such as a Bambury mixer, internal mixer, and kneader for primary kneading, then transferring the mixture to open rolls etc. and add the polyamine-based cross-linking agent (b) and the ingredient which is unstable against heat such as cross-linking aid for secondary kneading. Note that, the primary kneading is usually performed at 10 to 200°C, preferably 30 to 180°C in temperature, for 1 minute to 1 hour, preferably 1 minute to 30 minutes, while the secondary kneading is usually performed at 10 to 90°C, preferably 20 to 60°C in temperature, for 1 minute to 1 hour, preferably 1 minute to 30 minutes.

The cross-linkable nitrile rubber composition of the present invention obtained in this way has a compound Mooney viscosity (ML₁₊₄, 100°C) of preferably 10 to 200, more preferably 40 to 140, still more preferably 50 to 100 and is excellent in workability.

### Cross-Linked Rubber

The cross-linked rubber of the present invention is obtained by cross-linking the above-mentioned cross-linkable nitrile rubber composition of the present invention.

The cross-linked rubber of the present invention can be produced by forming the above-mentioned cross-linkable nitrile rubber composition of the present invention by a forming machine corresponding to the shape of the product to be produced, for example, an extruder, injection molding machine, press, rolls, etc., heating it to cause a cross-linking reaction, then fixing the shape as cross-linked product. In this case, the composition can be formed in advance, then cross-linked or may be formed and simultaneously cross-linked. The forming temperature is usually 10 to 200°C, preferably 25 to 120°C. The cross-linking temperature is usually 100 to 200°C, preferably is 130 to 190°C, while the cross-linking time is usually 1 minute to 24 hours, preferably 2 minutes to 1 hour.

Further, the cross-linked rubber sometimes may be cross-linked at its surface, but not sufficiently cross-linked at its inside depending upon its shape, size, etc., so may be further heated for secondary cross-linking.

As the heating method, a general method used for cross-linking rubber such as press heating, steam heating, oven heating, and hot air heating may be suitably selected.

The thus obtained cross-linked rubber of the present invention is obtained by cross-linking the cross-linkable nitrile rubber composition of the present invention, so is excellent in mechanical properties such as tensile strength and elongation and is excellent in heat aging resistance, cold resistance, and compression set resistance.

Therefore, the cross-linked rubber of the present invention, taking advantage of such a characteristic, can be used for various seal members such as O-rings, packings, diaphragms, oil seals, shaft seals, bearing seals, well head seals, shock absorber seals, air compressor seals, seals for sealing in Freon or fluorohydrocarbons or carbon dioxide which is used for compressors for cooling devices for air conditioners or refrigerating machines of air-conditioning systems, seals for sealing in supercritical carbon dioxide or subcritical carbon dioxide which is used for the washing media in precision washing, seals for roller devices (roller bearings, automotive hub units, automotive water pumps, linear guide devices and ball screws, etc.), valves and valve seats, BOP (blow out preventers), and bladders; various types of gaskets such as intake manifold gaskets which are attached at connecting parts of intake manifolds and cylinder heads, cylinder head gaskets which are attached at connecting parts of cylinder blocks and cylinder heads, rocker cover gaskets which are attached at connecting parts of rocker covers and cylinder heads, oil pan gaskets which are attached at connecting parts of oil pans and cylinder blocks or transmission cases, fuel cell separator use gaskets which are attached between pairs of housings straddling unit cells provided with positive electrodes, electrolyte plates, and negative electrodes, and top cover use gaskets for hard disk drives; various types of rolls such as printing use rolls, ironmaking use rolls, papermaking use rolls, industrial use rolls, and office equipment use rolls; various types of belts such as flat belts (film core flat belts, cord flat belts, laminated flat belts, single type flat belts, etc.), V-belts (wrapped V-belts, low edge V-belts, etc.), V-ribbed belts (single V-ribbed belts, double V-ribbed belts, wrapped V-ribbed belt, rubber-backed V-ribbed belts, top cog V-ribbed belts, etc.), CVT use belts, timing belts, toothed belts, and conveyor belts; various types of hoses such as fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, and flow lines; various types of boots such as CVJ boots, propeller shaft boots, constant velocity joint boots, and rack and pinion boots; attenuating member rubber parts such as cushion materials, dynamic dampers, rubber couplings, air springs, shock absorbers, and clutch facing materials; dust covers, automotive interior members, friction materials, tires, covered cables, shoe soles, electromagnetic wave shields, binders for flexible printed circuits boards or other binders, fuel cell separators and also other broad applications in the electronics field.

In particular, the cross-linked rubber of the present invention not only has good mechanical strength and excellent compression set resistance, but is also excellent in cold resistance with a TR10 (temperature at the time of the length of the test piece contracted (recovered) by 10% due to the rise in temperature after causing the cross-linked rubber to freeze) of less than -38°C, preferably -40°C or less, and further can realize an excellent cold resistance even after heat aging so that it is excellent in heat aging resistance. For this reason, the cross-linked rubber of the present invention can be suitably used for a material which is used in a broad temperature range (for example, used from a high temperature environment of 150°C or more to a low temperature environment of -38°C or less). Specifically, the cross-linked rubber of the present invention can be suitably used as a seal material, belt, hose, or gasket and can be particularly preferably used as a shock absorber seal application.

### EXAMPLES

Below, examples and comparative examples will be given to explain the present invention more specifically, but the present invention is not limited to these examples. Below, "parts", unless otherwise indicated, are based on weight. Further, the methods of tests and evaluations of the properties and characteristics were as follows.

### Rubber Composition

The ratio of content of the monomers forming the highly saturated nitrile rubber was measured by the following method.

That is, the ratio of content of the mono-n-butyl maleate units was calculated by adding 100 ml of 2-butanone to 0.2 g of 2 mm square pieces highly saturated nitrile rubber, stirring the mixture for 16 hours, then adding 20 ml of ethanol and 10 ml of water, stirring while using a 0.02N hydrous ethanol solution of potassium hydroxide and thymol phthalein as an indicator for titration at room temperature to find the number of moles of carboxyl group with respect to 100 g of highly saturated nitrile rubber, and converting the found number of moles to the amount of mono-n-butyl maleate units.

The ratios of contents of the 1,3-butadiene units and saturated butadiene units were calculated by using highly saturated nitrile rubber to measure the iodine value before the hydrogenation reaction and after the hydrogenation reaction (according to JIS K 6235).

The ratio of content of acrylonitrile units was calculated in accordance with JIS K6384 by measuring the nitrogen content in the highly saturated nitrile rubber by the Kjeldahl method.

The ratios of contents of n-butyl acrylate units and 2-methoxyethyl acrylate units were found by calculation using the ratios of contents of the mono-n-butyl maleate units, 1,3-butadiene units, saturated butadiene units, and acrylonitrile units found above.

### Iodine Value

The iodine value of the highly saturated nitrile rubber was measured based on JIS K6235.

### Mooney Viscosity (Polymer Mooney)

The Mooney viscosity (polymer Mooney) of the highly saturated nitrile rubber was measured in accordance with JIS K6300 (units: [ML₁₊₄, 100°C]).

### Original State Physical Properties (Tensile Strength and Elongation)

The cross-linkable nitrile rubber composition was placed in a vertical 15 cm, horizontal 15 cm, depth 0.2 cm mold and press-formed at 170°C for 20 minutes to obtain a sheet-shaped cross-linked rubber. This was transferred to a gear oven and was secondarily cross-linked at 170°C for 4 hours, then the obtained sheet-shaped cross-linked rubber was punched by a JIS No. 3 type dumbbell shaped cutter to prepare a test piece. Further, the obtained test piece was used in accordance with JIS K6251 to measure tensile strength and elongation of the cross-linked rubber.

### Cold Resistance Test

Using the sheet-shaped cross-linked rubber obtained in the same way as the above evaluation of the original state physical properties, in accordance with JIS K6261, a TR test (low temperature elastic recovery test) was conducted to measure cold resistance of the cross-linked rubber. Specifically, a stretched test piece was made to freeze and the temperature was made to continuously rise to thereby measure the recovery of the test piece which had been stretched. The temperature TR10 when the length of the test piece contracted (recovered) by 10% due to the rise in temperature was measured. The lower the TR10, the better the cold resistance can be judged.

### Heat Aging Resistance Test (Cold Resistance After Heat Aging)

Using the sheet-shaped cross-linked rubber obtained in the same way as the above evaluation of the original state physical properties, based on the provisions in the JIS K6257 "Test Method of Aging of Vulcanized Rubber", Section 4, "Air Heating Aging Test (Normal Oven Method)", treatment for aging by air heating was performed under conditions of 150°C for 168 hours. Further, the sheet-shaped cross-linked rubber after the heat aging was tested in the same way as the above in accordance with JIS K6261 by a TR test (low temperature elastic recovery test) to measure the TR10 after heat aging. The lower the TR10 after heat aging and, further, the smaller the difference from the TR10 before heat aging, the better the heat aging resistance can be judged.

### O-ring Compression Set

Using an inside diameter 30 mm, ring diameter 3 mm die, a cross-linkable nitrile rubber composition was cross-linked at 170°C for 20 minutes by a press pressure of 10 MPa, then was secondarily cross-linked at 170°C for 4 hours to obtain an O-ring-shaped test piece. The O-ring compression set was measured in accordance with JIS K6262 under conditions holding this test piece in a state compressed 25% at 150°C for 168 hours.

### Example 1

To a metal bottle, 180 parts of ion exchanged water, 25 parts of a concentration 10 wt% sodium dodecylbenzene sulfonate aqueous solution, 8 parts of acrylonitrile, 6 parts of mono-n-butyl maleate, 47 parts of n-butyl acrylate, and 0.5 part of t-dodecylmercaptan (molecular weight adjuster) were charged in that order. The gas at the inside was replaced with nitrogen three times, then 39 parts of 1,3-butadiene were charged. The metal bottle was held at 5°C, 0.1 part of cumen hydroperoxide (polymerization initiator) was charged, and a polymerization reaction was performed for 16 hours while rotating the metal bottle. 0.1 part of concentration 10 wt% hydroquinone aqueous solution (polymerization terminator) was added to stop the polymerization reaction, then a water temperature 60°C rotary evaporator was used to remove the residual monomer to obtain a latex of a nitrile rubber (solid content concentration about 30 wt%).

Further, to an autoclave, the above obtained latex of a nitrile rubber and a palladium catalyst (solution of 1 wt% palladium acetate acetone solution and equal weight of ion exchanged water mixed together) were added so that the content of palladium became 1,000 wt ppm with respect to the dry weight of the rubber contained in the latex of a nitrile rubber. A hydrogenation reaction was performed at a hydrogen pressure of 3.0 MPa and a temperature of 50°C for 6 hours to obtain a latex of a highly saturated nitrile rubber (a-1).

Next, by adding two volumes of methanol to the obtained latex for coagulation, the result was vacuum dried at 60°C for 12 hours to thereby obtain a highly saturated nitrile rubber (a-1). The composition of monomer units of the obtained highly saturated nitrile rubber (a-1) was 8 wt% of acrylonitrile units, 5 wt% of mono-n-butyl maleate units, 49 wt% of n-butyl acrylate units, and 38 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 48.

Next, to 100 parts of the above obtained highly saturated nitrile rubber (a-1), 40 parts of FEF carbon black (product name "Asahi 60", made by Asahi Carbon), 5 parts of a trimellitic acid ester (product name "ADK Cizer C-8", made by Adeka, plasticizer), 1 part of stearic acid (cross-linking accelerator aid), 1.5 parts of 4,4'-di-(α,α'-dimethylbenzyl)diphenylamine (product name "Nauguard 445", made by Crompton, antiaging agent), and 1.5 parts of 2-mercaptobenzimidazole (product name "Nocrac MB", made by Ouchi Shinko Chemical Industrial, antiaging agent) were added and mixed, then the mixture was transferred to rolls and 2 parts of 1,3-di-o-tolylguanidine (product name "Noccelar DT", made by Ouchi Shinko Chemical Industrial, cross-linking accelerator) and 2.3 parts of hexamethylenediamine carbamate (product name "Diak#1", made by Dupont Dow Elastomer, polyamine-based cross-linking agent (b)) were added and kneaded to thereby obtain a cross-linkable nitrile rubber composition.

Further, the obtained cross-linkable nitrile rubber composition was used to test and evaluate the original state physical properties (tensile strength, elongation), cold resistance test, heat aging resistance test (cold resistance after heat aging), and O-ring compression set. The results are shown in Table 1.

### Example 2

Except for changing the amount of the acrylonitrile to 8 parts, the amount of the mono-n-butyl maleate to 6 parts, the amount of n-butyl acrylate to 38 parts, and the amount of 1,3-butadiene to 48 parts, the same procedure was followed as in Example 1 to obtain a highly saturated nitrile rubber (a-2). The composition of monomer units of the obtained highly saturated nitrile rubber (a-2) was 8 wt% of acrylonitrile units, 5 wt% of mono-n-butyl maleate units, 40 wt% of n-butyl acrylate units, and 47 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 47.

Further, except for using, instead of the highly saturated nitrile rubber (a-1), the above obtained highly saturated nitrile rubber (a-2), the same procedure was followed as in Example 1 to obtain a cross-linkable nitrile rubber composition and the same procedure was followed to evaluate it. The results are shown in Table 1.

### Example 3

Except for changing the amount of the acrylonitrile to 8 parts, the amount of mono-n-butyl maleate to 6 parts, the amount of n-butyl acrylate to 62 parts, and the amount of 1,3-butadiene to 24 parts, the same procedure was followed as in Example 1 to obtain a highly saturated nitrile rubber (a-3). The composition of monomer units of the obtained highly saturated nitrile rubber (a-3) was 8 wt% of acrylonitrile units, 5 wt% of mono-n-butyl maleate units, 65 wt% of n-butyl acrylate units, and 22 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 42.

Further, except for using, instead of the highly saturated nitrile rubber (a-1), the above obtained highly saturated nitrile rubber (a-3), the same procedure was followed as in Example 1 to obtain a cross-linkable nitrile rubber composition and the same procedure was followed to evaluate it. The results are shown in Table 1.

### Example 4

Except for changing the amount of the acrylonitrile to 8 parts, the amount of mono-n-butyl maleate to 4 parts, the amount of the n-butyl acrylate to 53 parts, and the amount of the 1,3-butadiene to 35 parts, the same procedure was followed as in Example 1 to obtain a highly saturated nitrile rubber (a-4). The composition of monomer units of the obtained highly saturated nitrile rubber (a-4) was 8 wt% of acrylonitrile units, 3 wt% of mono-n-butyl maleate units, 55 wt% of n-butyl acrylate units, and 34 wt% of 1,3-butadiene units (including also the hydrogenated part). Further, the iodine value was 10, the content of carboxyl group was 1.7×10⁻² ephr, and the polymer Mooney viscosity (ML₁₊₄, 100°C) was 61.

Further, except for using, instead of the highly saturated nitrile rubber (a-1), the above obtained highly saturated nitrile rubber (a-4), the same procedure was followed as in Example 1 to obtain a cross-linkable nitrile rubber composition and the same procedure was followed to evaluate it. The results are shown in Table 1.

### Example 5

Except for changing the amount of acrylonitrile to 11 parts, the amount of mono-n-butyl maleate to 6 parts, the amount of n-butyl acrylate to 42 parts, and the amount of 1,3-butadiene to 41 parts, the same procedure was followed as in Example 1 to obtain a highly saturated nitrile rubber (a-5). The composition of monomer units of the obtained highly saturated nitrile rubber (a-5) was 11 wt% of acrylonitrile units, 5 wt% of mono-n-butyl maleate units, 44 wt% of n-butyl acrylate units, and 40 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 60.

Further, except for using, instead of the highly saturated nitrile rubber (a-1), the above obtained highly saturated nitrile rubber (a-5), the same procedure was followed as in Example 1 to obtain a cross-linkable nitrile rubber composition and the same procedure was followed to evaluate it. The results are shown in Table 1.

### Example 6

Except for using as a plasticizer, instead of 5 parts of a trimellitic acid ester, 5 parts of a polyether ester-based plasticizer (product name "ADK Cizer RS-735", made by Adeka), the same procedure was followed as in Example 1 to obtain a cross-linkable nitrile rubber composition and the same procedure was followed to evaluate it. The results are shown in Table 1.

### Example 7

Except for making the amount of use of a palladium-silica catalyst 800 wt ppm and making the hydrogen pressure 3.0 MPa when performing the hydrogenation reaction, the same procedure was followed as in Example 1 to obtain a highly saturated nitrile rubber (a-6). The composition of monomer units of the obtained highly saturated nitrile rubber (a-6) was 8 wt% of acrylonitrile units, 5 wt% of mono-n-butyl maleate units, 49 wt% of n-butyl acrylate units, and 38 wt% of 1,3-butadiene units (including also the hydrogenated part). Further, the iodine value was 50, the content of carboxyl group was 2.8×10⁻² ephr, and the polymer Mooney viscosity (ML₁₊₄, 100°C) was 43.

Further, except for using, instead of the highly saturated nitrile rubber (a-1), the above obtained highly saturated nitrile rubber (a-6) and using as a plasticizer, instead of 5 parts of a trimellitic acid ester, 5 parts of a polyether ester-based plasticizer (product name "ADK Cizer RS-735", made by Adeka), the same procedure was followed as in Example 1 to obtain a cross-linkable nitrile rubber composition and the same procedure was followed to evaluate it. The results are shown in Table 1.

### Example 8

Except for using as a plasticizer, instead of 5 parts of a polyether ester-based plasticizer, 5 parts of an adipic acid ester-based plasticizer (product name "ADK Cizer RS-107", made by Adeka, bis[2-(2-butoxyethoxy)ethyl] adipate), the same procedure was followed as in Example 7 to obtain a cross-linkable nitrile rubber composition and the same procedure was followed to evaluate it. The results are shown in Table 1.

### Example 9

Except for changing the amount of the FEF carbon black from 40 parts to 70 parts, the same procedure was followed as in Example 8 to obtain a cross-linkable nitrile rubber composition and the same procedure was followed to evaluate it. The results are shown in Table 1.

### Example 10

Except for using, instead of 47 parts of n-butyl acrylate, 51 parts of 2-methoxyethyl acrylate and changing the amount of acrylonitrile to 8 parts, the amount of mono-n-butyl maleate to 6 parts, and the amount of 1,3-butadiene to 35 parts, the same procedure was followed as in Example 1 to obtain a highly saturated nitrile rubber (a-7). The obtained highly saturated nitrile rubber (a-7) was 8 wt% of acrylonitrile units, 5 wt% of mono-n-butyl maleate units, 53 wt% of 2-methoxyethyl acrylate units, and 34 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 55.

Further, except for using, instead of the highly saturated nitrile rubber (a-1), the above obtained highly saturated nitrile rubber (a-7), the same procedure was followed as in Example 1 to obtain a cross-linkable nitrile rubber composition and the same procedure was followed to evaluate it. The results are shown in Table 1.

### Example 11

Except for changing the amount of use of the palladium-silica catalyst to 700 wt ppm and making the hydrogen pressure 3.0 MPa when performing the hydrogenation reaction, the same procedure was followed as in Example 10 to obtain a highly saturated nitrile rubber (a-8). The composition of monomer units of the obtained highly saturated nitrile rubber (a-8) was 8 wt% of acrylonitrile units, 5 wt% of mono-n-butyl maleate units, 53 wt% of 2-methoxyethyl acrylate units, and 34 wt% of 1,3-butadiene units (including also the hydrogenated part). Further, the iodine value was 60, the content of carboxyl group was 2.8×10⁻² ephr, and the polymer Mooney viscosity (ML₁₊₄, 100°C) was 48.

Further, except for using, instead of the highly saturated nitrile rubber (a-7), the above obtained highly saturated nitrile rubber (a-8), the same procedure was followed as in Example 10 to obtain a cross-linkable nitrile rubber composition and the same procedure was followed to evaluate it. The results are shown in Table 1.

### Example 12

Except for using, instead of 47 parts of n-butyl acrylate, 38 parts of 2-methoxyethyl acrylate and changing the amount of acrylonitrile to 11 parts, the amount of mono-n-butyl maleate to 6 parts, and the amount of 1,3-butadiene to 45 parts, the same procedure was followed as in Example 1 to obtain a highly saturated nitrile rubber (a-9). The composition of monomer units of the obtained highly saturated nitrile rubber (a-9) was 11 wt% of acrylonitrile units, 5 wt% of mono-n-butyl maleate units, 40 wt% of 2-methoxyethyl acrylate units, and 44 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 53.

Further, except for using, instead of the highly saturated nitrile rubber (a-1), the above obtained highly saturated nitrile rubber (a-9), the same procedure was followed as in Example 1 to obtain a cross-linkable nitrile rubber composition and the same procedure was followed to evaluate it. The results are shown in Table 1.

### Example 13

Except for making the amount of use of the palladium-silica catalyst 700 wt ppm and making the hydrogen pressure 3.0 MPa when performing the hydrogenation reaction, the same procedure was followed as in Example 12 to obtain a highly saturated nitrile rubber (a-10). The composition of monomer units of the obtained highly saturated nitrile rubber (a-10) was 11 wt% of acrylonitrile units, 5 wt% of mono-n-butyl maleate units, 40 wt% of 2-methoxyethyl acrylate units, and 44 wt% of 1,3-butadiene units (including also the hydrogenated part). Further, the iodine value was 60, the content of carboxyl group was 2.8×10⁻² ephr, and the polymer Mooney viscosity (ML₁₊₄, 100°C) was 46.

Further, except for using, instead of the highly saturated nitrile rubber (a-9), the above obtained highly saturated nitrile rubber (a-10), the same procedure was followed as in Example 12 to obtain a cross-linkable nitrile rubber composition and the same procedure was followed to evaluate it. The results are shown in Table 1.

### Comparative Example 1

Except for changing the amount of acrylonitrile to 15 parts, the amount of mono-n-butyl maleate to 6 parts, the amount of n-butyl acrylate to 39 parts, and the amount of 1,3-butadiene to 40 parts, the same procedure was followed as in Example 1 to obtain a highly saturated nitrile rubber (a'-11). The composition of monomer units of the obtained highly saturated nitrile rubber (a'-11) was 15 wt% of acrylonitrile units, 5 wt% of mono-n-butyl maleate units, 35 wt% of n-butyl acrylate units, and 45 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 20.

Further, except for using, instead of the highly saturated nitrile rubber (a-1), the above obtained highly saturated nitrile rubber (a'-11), the same procedure was followed as in Example 1 to obtain a cross-linkable nitrile rubber composition and the same procedure was followed to evaluate it. The results are shown in Table 2.

### Comparative Example 2

Except for changing the amount of acrylonitrile to 8 parts, the amount of mono-n-butyl maleate to 6 parts, the amount of n-butyl acrylate to 39 parts, and the amount of 1,3-butadiene to 47 parts, the same procedure was followed as in Example 1 to obtain a highly saturated nitrile rubber (a'-12). The composition of monomer units of the obtained highly saturated nitrile rubber (a'-12) was 8 wt% of acrylonitrile units, 5 wt% of mono-n-butyl maleate units, 35 wt% of n-butyl acrylate units, and 52 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 49.

Further, except for using, instead of the highly saturated nitrile rubber (a-1), the above obtained highly saturated nitrile rubber (a'-12), the same procedure was followed as in Example 1 to obtain a cross-linkable nitrile rubber composition and the same procedure was followed to evaluate it. The results are shown in Table 2.

### Comparative Example 3

Except for changing the amount of acrylonitrile to 8 parts, the amount of mono-n-butyl maleate to 6 parts, the amount of n-butyl acrylate to 75 parts, and the amount of 1,3-butadiene to 11 parts, the same procedure was followed as in Example 1 to obtain a highly saturated nitrile rubber (a'-13). The composition of monomer units of the obtained highly saturated nitrile rubber (a'-13) was 8 wt% of acrylonitrile units, 5 wt% of mono-n-butyl maleate units, 77 wt% of n-butyl acrylate units, and 10 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 56.

Further, except for using, instead of the highly saturated nitrile rubber (a-1), the above obtained highly saturated nitrile rubber (a'-13), the same procedure was followed as in Example 1 to obtain a cross-linkable nitrile rubber composition and the same procedure was followed to evaluate it. The results are shown in Table 2.

### Comparative Example 4

Except for changing the amount of acrylonitrile to 8 parts, the amount of mono-n-butyl maleate to 1 part, the amount of n-butyl acrylate to 54 parts, and the amount of 1,3-butadiene to 37 parts, the same procedure was followed as in Example 1 to obtain a highly saturated nitrile rubber (a'-14). The composition of monomer units of the obtained highly saturated nitrile rubber (a'-14) was 8 wt% of acrylonitrile units, 0.5 wt% of mono-n-butyl maleate units, 56 wt% of n-butyl acrylate units, and 35.5 wt% of 1,3-butadiene units (including also the hydrogenated part). Further, the iodine value was 10, the content of carboxyl group was 3.0×10⁻³ ephr, and the polymer Mooney viscosity (ML₁₊₄, 100°C) was 45.

Further, except for using, instead of the highly saturated nitrile rubber (a-1), the above obtained highly saturated nitrile rubber (a'-14), the same procedure was followed as in Example 1 to obtain a cross-linkable nitrile rubber composition and the same procedure was followed to evaluate it. The results are shown in Table 2.

### Comparative Example 5

Except for changing the amount of acrylonitrile to 8 parts, the amount of mono-n-butyl maleate to 17 parts, the amount of n-butyl acrylate to 47 parts, and the amount of 1,3-butadiene to 28 parts, the same procedure was followed as in Example 1 to obtain a highly saturated nitrile rubber (a'-15). The composition of monomer units of the obtained highly saturated nitrile rubber (a'-15) was 8 wt% of acrylonitrile units, 15 wt% of mono-n-butyl maleate units, 50 wt% of n-butyl acrylate units, and 27 wt% of 1,3-butadiene units (including also the hydrogenated part). Further, the iodine value was 10, the content of carboxyl group was 7.9×10⁻² ephr, and the polymer Mooney viscosity (ML₁₊₄, 100°C) was 52.

Further, except for using, instead of the highly saturated nitrile rubber (a-1), the above obtained highly saturated nitrile rubber (a'-15), the same procedure was followed as in Example 1 to obtain a cross-linkable nitrile rubber composition and the same procedure was followed to evaluate it. The results are shown in Table 2.

### Comparative Example 6

Except for changing the amount of acrylonitrile to 11 parts, the amount of mono-n-butyl maleate to 6 parts, the amount of n-butyl acrylate to 39 parts, and the amount of 1,3-butadiene to 44 parts, the same procedure was followed as in Example 1 to obtain a highly saturated nitrile rubber (a'-16). The composition of monomer units of the obtained highly saturated nitrile rubber (a'-16) was 11 wt% of acrylonitrile units, 5 wt% of mono-n-butyl maleate units, 35 wt% of n-butyl acrylate units, and 49 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 55.

Further, except for using, instead of the highly saturated nitrile rubber (a-1), the above obtained highly saturated nitrile rubber (a'-16), the same procedure was followed as in Example 1 to obtain a cross-linkable nitrile rubber composition and the same procedure was followed to evaluate it. The results are shown in Table 2.

### Comparative Example 7

Except for changing the amount of acrylonitrile to 8 parts, the amount of mono-n-butyl maleate to 6 parts, the amount of n-butyl acrylate to 20 parts, and the amount of 1,3-butadiene to 66 parts, the same procedure was followed as in Example 1 to obtain a highly saturated nitrile rubber (a'-17). The composition of monomer units of the obtained highly saturated nitrile rubber (a'-17) was 8 wt% of acrylonitrile units, 5 wt% of mono-n-butyl maleate units, 22 wt% of n-butyl acrylate units, and 65 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 53.

Further, except for using, instead of the highly saturated nitrile rubber (a-1), the above obtained highly saturated nitrile rubber (a'-17), the same procedure was followed as in Example 1 to obtain a cross-linkable nitrile rubber composition and the same procedure was followed to evaluate it. The results are shown in Table 2.

### Comparative Example 8

Except for changing the amount of acrylonitrile to 8 parts, the amount of mono-n-butyl maleate to 6 parts, and the amount of 1,3-butadiene to 86 parts and not including n-butyl acrylate, the same procedure was followed as in Example 1 to obtain a highly saturated nitrile rubber (a'-18). The composition of the monomer units of the obtained highly saturated nitrile rubber (a'-18) was 8 wt% of acrylonitrile units, 5 wt% of mono-n-butyl maleate units, and 87 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 51.

Further, except for using, instead of the highly saturated nitrile rubber (a-1), the above obtained highly saturated nitrile rubber (a'-18), the same procedure was followed as in Example 1 to obtain a cross-linkable nitrile rubber composition and the same procedure was followed to evaluate it. The results are shown in Table 2.

### Comparative Example 9

Except for using as a plasticizer, instead of 5 parts of a trimellitic acid ester, a polyether ester-based plasticizer (product name "ADK Cizer RS-735", made by Adeka), the same procedure was followed as in Comparative Example 1 to obtain a cross-linkable nitrile rubber composition and the same procedure was followed to evaluate it. The results are shown in Table 2.

### Comparative Example 10

Except for changing the amount of acrylonitrile to 16 parts, the amount of the mono-n-butyl maleate to 6 parts, the amount of n-butyl acrylate to 36 parts, and the amount of 1,3-butadiene to 42 parts, the same procedure was followed as in Example 1 to obtain a highly saturated nitrile rubber (a'-19). The composition of the monomer units of the obtained highly saturated nitrile rubber (a'-19) was 16 wt% of acrylonitrile units, 5 wt% of mono-n-butyl maleate units, 39 wt% of n-butyl acrylate units, and 40 wt% of 1,3-butadiene units (including also the hydrogenated part). Further, the iodine value was 10, the content of carboxyl group was 2.8×10⁻² ephr, and the polymer Mooney viscosity (ML₁₊₄, 100°C) was 37.

Further, except for using, instead of the highly saturated nitrile rubber (a-1), the above obtained highly saturated nitrile rubber (a'-19), the same procedure was followed as in Example 1 to obtain a cross-linkable nitrile rubber composition and the same procedure was followed to evaluate it. The results are shown in Table 2.

### Comparative Example 11

Except for making the amount of use of the palladium-silica catalyst 700 wt ppm and making the hydrogen pressure 3.0 Mpa when performing the hydrogenation reaction, the same procedure was followed as in Comparative Example 10 to obtain the highly saturated nitrile rubber (a'-20). The composition of monomer units of the obtained highly saturated nitrile rubber (a'-20) was 16 wt% of acrylonitrile units, 5 wt% of mono-n-butyl maleate units, 39 wt% of n-butyl acrylate units, and 40 wt% of 1,3-butadiene units (including also the hydrogenated part). Further, the iodine value was 60, the content of carboxyl group was 2.8×10⁻² ephr, and the polymer Mooney viscosity (ML₁₊₄, 100°C) was 43.

Further, except for using, instead of the highly saturated nitrile rubber (a'-19), the above obtained highly saturated nitrile rubber (a'-20), the same procedure was followed as in Comparative Example 10 to obtain a cross-linkable nitrile rubber composition and the same procedure was followed to evaluate it. The results are shown in Table 2.

### Comparative Example 12

Except for using as a plasticizer, instead of 5 parts of a trimellitic acid ester, 5 parts of an adipic acid ester-based plasticizer (product name "ADK Cizer RS-107", made by Adeka, bis[2-(2-butoxyethoxy)ethyl] adipate) and changing the amount of FEF carbon black from 40 parts to 70 parts, the same procedure was followed as in Comparative Examples 11 to obtain a cross-linkable nitrile rubber composition and the same procedure was followed to evaluate it. The results are shown in Table 2.

### Comparative Example 13

Except for using, instead of the 40 parts of FEF carbon black, 40 parts of silica (product name "Nipsil ER", made by Toso Silica) and further mixing in 0.5 part of 3-aminopropyltriethoxysilane (product name "Z-6011", made by Dow Corning Toray), the same procedure was followed as in Comparative Example 11 to obtain a cross-linkable nitrile rubber composition and the same procedure was followed to evaluate it. The results are shown in Table 2.

### Comparative Example 14

Except for changing the amount of silica (product name "Nipsil ER", made by Toso Silica) from 40 parts to 70 parts, the same procedure was followed as in Comparative Example 13 to obtain a cross-linkable nitrile rubber composition and the same procedure was followed to evaluate it. The results are shown in Table 2.

### Table 1

**Table 1**

| | | | Examples | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Composition of highly saturated nitrile rubber | | | | | | | | | | | | | | | |
| | Acrylonitrile units | (wt%) | 8 | 8 | 8 | 8 | 11 | 8 | 8 | 8 | 8 | 8 | 8 | 11 | 11 |
| | Mono-n-butyl maleate units | (wt%) | 5 | 5 | 5 | 3 | 5 | 5 | 5 | 5 | 5 | 5 | 5 | 5 | 5 |
| | n-butyl acrylate units | (wt%) | 49 | 40 | 65 | 55 | 44 | 49 | 49 | 49 | 49 | | | | |
| | 2-methoxyethyl acrylate units | (wt%) | | | | | | | | | | 53 | 53 | 40 | 40 |
| | 1,3-butadiene units (including hydrogenated part) | (wt%) | 38 | 47 | 22 | 34 | 40 | 38 | 38 | 38 | 38 | 34 | 34 | 44 | 44 |
| Iodine value of highly saturated nitrile rubber | | | 10 | 10 | 10 | 10 | 10 | 10 | 50 | 50 | 50 | 10 | 60 | 10 | 60 |
| Composition of cross-linkable nitrile rubber composition | | | | | | | | | | | | | | | |
| | Highly saturated nitrile rubber | (parts) | 100 | 100 | 100 | 100 | 100 | 100 | 100 | 100 | 100 | 100 | 100 | 100 | 100 |
| | FEF carbon black | (parts) | 40 | 40 | 40 | 40 | 40 | 40 | 40 | 40 | 70 | 40 | 40 | 40 | 40 |
| | Trimellitic acid ester | (parts) | 5 | 5 | 5 | 5 | 5 | | | | | 5 | 5 | 5 | 5 |
| | Polyether ester-based plasticizer | (parts) | | | | | | 5 | 5 | | | | | | |
| | Adipic acid ester-based plasticizer | (parts) | | | | | | | | 5 | 5 | | | | |
| | Stearic acid | (parts) | 1 | 1 | 1 | 1 | 1 | 1 | 1 | 1 | 1 | 1 | 1 | 1 | 1 |
| | 4,4'-di-(*α*,*α*'-dimethylbenzyl)diphenylamine | (parts) | 1.5 | 1.5 | 1.5 | 1.5 | 1.5 | 1.5 | 1.5 | 1.5 | 1.5 | 1.5 | 1.5 | 1.5 | 1.5 |
| | 2-mercaptobenzimidazole | (parts) | 1.5 | 1.5 | 1.5 | 1.5 | 1.5 | 1.5 | 1.5 | 1.5 | 1.5 | 1.5 | 1.5 | 1.5 | 1.5 |
| | 1,3-di-o-tolylguanidine | (parts) | 2 | 2 | 2 | 2 | 2 | 2 | 2 | 2 | 2 | 2 | 2 | 2 | 2 |
| | Hexamethylenediamine carbamate | (parts) | 2.3 | 2.3 | 2.3 | 2.3 | 2.3 | 2.3 | 2.3 | 2.3 | 2.3 | 2.3 | 2.3 | 2.3 | 2.3 |
| Evaluation | | | | | | | | | | | | | | | |
| | Tensile strength | (MPa) | 15.4 | 16.3 | 13.2 | 15.8 | 17.1 | 15.2 | 15.6 | 15.5 | 14.7 | 15.1 | 15.0 | 16.1 | 15.7 |
| | Elongation | (%) | 172 | 181 | 192 | 178 | 180 | 177 | 176 | 175 | 151 | 168 | 171 | 180 | 183 |
| | TR10 (cold resistance) | (°C) | -43 | -43 | -42 | -43 | -40 | -44 | -45 | -45 | -45 | -43 | -45 | -40 | -40 |
| | TR10 after heat aging (heat aging resistance) | (°C) | -42 | -42 | -40 | -42 | -38 | -43 | -42 | -43 | -42 | -41 | -43 | -38 | -39 |
| | O-ring compression set | (%) | 48 | 51 | 52 | 50 | 45 | 49 | 46 | 45 | 48 | 51 | 48 | 47 | 46 |

### Table 2

**Table 2**

| | | | Comparative Examples | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Composition of highly saturated nitrile rubber | | | | | | | | | | | | | | | | |
| | Acrylonitrile units | (wt%) | 15 | 8 | 8 | 8 | 8 | 11 | 8 | 8 | 15 | 16 | 16 | 16 | 16 | 16 |
| | Mono-n-butyl maleate units | (wt%) | 5 | 5 | 5 | 0.5 | 15 | 5 | 5 | 5 | 5 | 5 | 5 | 5 | 5 | 5 |
| | n-butyl acrylate units | (wt%) | 35 | 35 | 77 | 56 | 50 | 35 | 22 | 0 | 35 | 39 | 39 | 39 | 39 | 39 |
| | 2-methoxyethyl acrylate units | (wt%) | | | | | | | | | | | | | | |
| | 1,3-butadiene units (including hydrogenated part) | (wt%) | 45 | 52 | 10 | 35.5 | 27 | 49 | 65 | 87 | 45 | 40 | 40 | 40 | 40 | 40 |
| Iodine value of highly saturated nitrile rubber | | | 10 | 10 | 10 | 10 | 10 | 10 | 10 | 10 | 10 | 10 | 60 | 60 | 60 | 60 |
| Composition of cross-linkable nitrile rubber composition | | | | | | | | | | | | | | | | |
| | Highly saturated nitrile rubber | (parts) | 100 | 100 | 100 | 100 | 100 | 100 | 100 | 100 | 100 | 100 | 100 | 100 | 100 | 100 |
| | FEF carbon black | (parts) | 40 | 40 | 40 | 40 | 40 | 40 | 40 | 40 | 40 | 40 | 40 | 70 | | |
| | Silica | (parts) | | | | | | | | | | | | | 40 | 70 |
| | Trimellitic acid ester | (parts) | 5 | 5 | 5 | 5 | 5 | 5 | 5 | 5 | | 5 | 5 | | 5 | 5 |
| | Polyether ester-based plasticizer | (parts) | | | | | | | | | 5 | | | | | |
| | Adipic acid ester-based plasticizer | (parts) | | | | | | | | | | | | 5 | | |
| | Stearic acid | (parts) | 1 | 1 | 1 | 1 | 1 | 1 | 1 | 1 | 1 | 1 | 1 | 1 | 1 | 1 |
| | 3-aminopropyltriethoxysilane | (parts) | | | | | | | | | | | | | 0.5 | 0.5 |
| | 4,4'-di-(*α*,*α*'-dimethylbenzyl)diphenylamine | (parts) | 1.5 | 1.5 | 1.5 | 1.5 | 1.5 | 1.5 | 1.5 | 1.5 | 1.5 | 1.5 | 1.5 | 1.5 | 1.5 | 1.5 |
| | 2-mercaptobenzimidazole | (parts) | 1.5 | 1.5 | 1.5 | 1.5 | 1.5 | 1.5 | 1.5 | 1.5 | 1.5 | 1.5 | 1.5 | 1.5 | 1.5 | 1.5 |
| | 1,3-di-o-tolylguanidine | (parts) | 2 | 2 | 2 | 2 | 2 | 2 | 2 | 2 | 2 | 2 | 2 | 2 | 2 | 2 |
| | Hexamethylenediamine carbamate | (parts) | 2.3 | 2.3 | 2.3 | 2.3 | 2.3 | 2.3 | 2.3 | 2.3 | 2.3 | 2.3 | 2.3 | 2.3 | 2.3 | 2.3 |
| Evaluation | | | | | | | | | | | | | | | | |
| | Tensile strength | (MPa) | 14.0 | 13.5 | 11.2 | 12.0 | 15.7 | 16.3 | 13.5 | 18.8 | 13.7 | 14.1 | 14.3 | 15.0 | 14.0 | 13.9 |
| | Elongation | (%) | 200 | 212 | 205 | 201 | 150 | 190 | 200 | 200 | 205 | 186 | 175 | 155 | 145 | 120 |
| | TR10 (cold resistance) | (°C) | -35 | -38 | -33 | -45 | -28 | -36 | -32 | -11 | -39 | -35 | -37 | -38 | -35 | -37 |
| | TR10 after heat aging (heat aging resistance) | (°C) | -28 | -30 | -31 | -43 | -26 | -30 | -27 | -5 | -35 | -28 | -30 | -31 | -29 | -31 |
| | O-ring compression set | (%) | 45 | 47 | 57 | 74 | 46 | 44 | 47 | 56 | 47 | 47 | 49 | 48 | 49 | 47 |

As shown in Table 1, a cross-linked rubber obtained using a cross-linkable nitrile rubber composition comprising a nitrile rubber containing 0.1 to 15 wt% of α,β-ethylenically unsaturated nitrile monomer units, 1 to 10 wt% of α,β-ethylenically unsaturated dicarboxylic acid monoester monomer units, 40 to 75 wt% of α,β-ethylenically unsaturated monocarboxylic acid ester monomer units, and 20 to 58.9 wt% of diene monomer units and/or α-olefin monomer units to which a polyamine-based cross-linking agent is added is excellent in tensile strength and elongation, has a TR10 and a TR10 after heat aging of both -38°C or less, and is excellent in cold resistance and heat aging resistance and, further, is kept low in O-ring compression set (Examples 1 to 13). From this result, the cross-linked rubber obtained using the cross-linkable nitrile rubber composition of the present invention can be used well in a broad range of temperature and can be said to be particularly suited to a rubber part in which use in a broad range of temperature is sought.

On the other hand, if any of the monomer units of the nitrile rubber is off from the predetermined range of the present invention, the result becomes inferior in cold resistance (Comparative Examples 3, 5, 6, 8, and 10 to 14), the result becomes inferior in heat aging resistance (Comparative Examples 1 to 3 and Comparative Examples 5 to 14), or the result becomes inferior in O-ring compression set even if the cold resistance and heat aging resistance are good (Comparative Example 4).

## Claims

1. A cross-linkable nitrile rubber composition comprising:
a nitrile rubber (a) containing 0.1 to 15 wt% of α,β-ethylenically unsaturated nitrile monomer units, 1 to 10 wt% of α,β-ethylenically unsaturated dicarboxylic acid monoester monomer units, 40 to 75 wt% of α,β-ethylenically unsaturated monocarboxylic acid ester monomer units, and 20 to 58.9 wt% of diene monomer units and/or α-olefin monomer units, and
a polyamine-based cross-linking agent (b), wherein
a ratio of content of the polyamine-based cross-linking agent (b) with respect to 100 parts by weight of the nitrile rubber (a) is 0.1 to 20 parts by weight.

2. The cross-linkable nitrile rubber composition according to claim 1 wherein the nitrile rubber (a) has an iodine value of 120 or less.

3. The cross-linkable nitrile rubber composition according to claim 1 or 2 wherein the α,β-ethylenically unsaturated dicarboxylic acid monoester monomer units are mono-n-butyl maleate units.

4. The cross-linkable nitrile rubber composition according to any one of claims 1 to 3 wherein the α,β-ethylenically unsaturated monocarboxylic acid ester monomer units are butyl acrylate units and/or methoxyethyl acrylate units.

5. The cross-linkable nitrile rubber composition according to any one of claims 1 to 4 further comprising a basic cross-linking accelerator.

6. The cross-linkable nitrile rubber composition according to any one of claims 1 to 5 further comprising a plasticizer.

7. The cross-linkable nitrile rubber composition according to claim 6 wherein the plasticizer is at least one type selected from a trimellitic acid-based plasticizer, ether ester-based plasticizer, and adipic acid ester-based plasticizer.

8. A cross-linked rubber obtained by cross-linking the cross-linkable nitrile rubber composition according to any one of claims 1 to 7.

## Patentansprüche

1. Quervemetzbare Nitrilkautschukzusammensetzung, umfassend:
einen Nitrilkautschuk (a), enthaltend 0,1 bis 15 Gewichts-% an α,β-ethylenisch ungesättigten Nitril-Monomereinheiten, 1 bis 10 Gewichts-% an α,β--ethylenisch ungesättigten Dicarbonsäuremonoester-Monomereinheiten, 40 bis 75 Gewichts-% an α,β-ethylenisch ungesättigten Monocarbonsäureester-Monomereinheiten, und 20 bis 58,9 Gewichts-% an Dien-Monomereinheiten und/oder α-Olefin-Monomereinheiten,
sowie
einen auf Polyamin basierenden Quervernetzer (b), wobei ein Anteil des Gehalts an dem auf Polyamin basierenden Quervernetzer (b) in Bezug auf 100 Gewichtsteile des Nitrilkautschuks (a) 0,1 bis 20 Gewichtsteile beträgt.

2. Die quervemetzbare Nitrilkautschukzusammensetzung gemäß Anspruch 1, wobei der Nitrilkautschuk (a) eine Iodzahl von 120 oder weniger aufweist.

3. Die quervemetzbare Nitrilkautschukzusammensetzung gemäß Anspruch 1 oder 2, wobei die α,β-ethylenisch ungesättigten Dicarbonsäuremonoester-Monomereinheiten Mono-n-butylmaleat-Einheiten sind.

4. Die quervemetzbare Nitrilkautschukzusammensetzung gemäß einem der Ansprüche 1 bis 3, wobei die α,β-ethylenisch ungesättigten Monocarbonsäureester-Monomereinheiten Butylacrylat-Einheiten und/oder Methoxyethylacrylat-Einheiten sind.

5. Die quervemetzbare Nitrilkautschukzusammensetzung gemäß einem der Ansprüche 1 bis 4, weiter umfassend einen basischen Quervernetzungsbeschleuniger.

6. Die quervemetzbare Nitrilkautschukzusammensetzung gemäß einem der Ansprüche 1 bis 5, weiter umfassend einen Weichmacher.

7. Die quervemetzbare Nitrilkautschukzusammensetzung gemäß Anspruch 6, wobei der Weichmacher wenigstens eine Art, ausgewählt aus einem auf Trimellithsäure basierenden Weichmacher, einem auf Etherester basierenden Weichmacher, und einem auf Adipinsäureester basierenden Weichmacher, ist.

8. Quervernetzer Kautschuk, erhalten durch Quervernetzen der quervernetzbaren Nitrilkautschukzusammensetzung gemäß einem der Ansprüche 1 bis 7.

## Revendications

1. Composition de caoutchouc nitrile réticulable comprenant :
un caoutchouc nitrile (a) contenant 0,1 à 15 % en poids de motifs de monomère de nitrile a, β-éthyléniquement insaturés, 1 à 10 % en poids de motifs de monomère de monoester d'acide dicarboxylique α,β-éthyléniquement insaturés, 40 à 75 % en poids de motifs de monomère d'ester d'acide monocarboxylique α,β-éthyléniquement insaturés, et 20 à 58,9 % en poids de motifs de monomère de diène et/ou motifs de monomère de α-oléfine, et
un agent de réticulation à base de polyamine (b), dans laquelle
le rapport de la teneur de l'agent de réticulation à base de polyamine (b) par rapport à 100 parties en poids du caoutchouc nitrile (a) est de 0,1 à 20 parties en poids.

2. Composition de caoutchouc nitrile réticulable selon la revendication 1, dans laquelle le caoutchouc nitrile (a) a un indice d'iode de 120 ou moins.

3. Composition de caoutchouc nitrile réticulable selon la revendication 1 ou 2, dans laquelle les motifs de monomère de monoester d'acide dicarboxylique α,β-éthyléniquement insaturés sont des motifs de maléate de mono-n-butyle.

4. Composition de caoutchouc nitrile réticulable selon l'une quelconque des revendications 1 à 3, dans laquelle les motifs de monomère d'ester d'acide monocarboxylique α,β-éthyléniquement insaturés sont des motifs d'acrylate de butyle et/ou des motifs d'acrylate de méthoxyéthyle.

5. Composition de caoutchouc nitrile réticulable selon l'une quelconque des revendications 1 à 4 comprenant en outre un accélérateur de réticulation basique.

6. Composition de caoutchouc nitrile réticulable selon l'une quelconque des revendications 1 à 5, comprenant en outre un plastifiant.

7. Composition de caoutchouc nitrile réticulable selon la revendication 6, dans laquelle le plastifiant est d'au moins un type choisi parmi un plastifiant à base d'acide trimellitique, un plastifiant à base d'ester d'éther et un plastifiant à base d'ester d'acide adipique.

8. Caoutchouc réticulé obtenu par réticulation de la composition de caoutchouc nitrile réticulable selon l'une quelconque des revendications 1 à 7.
